# EUROPÄISCHE PATENTANMELDUNG

(11) **EP 3 100 889 A1**
(43) Veröffentlichungstag der Anmeldung: **07.12.2016**
(21) Anmeldenummer: 15170393.1
(22) Anmeldetag: 03.06.2015
(51) Int. Cl.: B60K 6/48, B60K 6/365, B60K 6/547, F16H 3/72, F16H 3/44

(54) **GETRIEBE FÜR EIN KRAFTFAHRZEUG, SOWIE ANTRIEBSTRANG FÜR EIN HYBRIDFAHRZEUG MIT EINEM SOLCHEN GETRIEBE**

(71) Anmelder: ZF Friedrichshafen AG, 88046 Friedrichshafen (DE)
(72) Erfinder: Ziemer, Peter, 88069 Tettnang (DE); Beck, Stefan, 88097 Eriskirch (DE); Brehmer, Martin, 88069 Tettnang (DE); Horn, Matthias, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88131 Lindau (DE); Griesmeier, Uwe, 88677 Markdorf (DE); Kuberczyk, Raffael, 88212 Ravensburg (DE)

(57) **Zusammenfassung**

Getriebe (1) für ein Kraftfahrzeug, wobei das Getriebe (1) eine Antriebswelle (3), eine Abtriebswelle (4), eine elektrische Maschine (2) mit einem drehfesten Stator (9) und einem drehbaren Rotor (11), einen Hauptradsatz (HRS) mit drei Planetenradsätzen (P1, P2, P3), einen Vorschaltradsatz (VRS), sowie fünf Schaltelemente (A, B, C, D, E) aufweist, wobei die drei Planetenradsätze (P1, P2, P3) des Hauptradsatzes (HRS) zusammen fünf in der Reihenfolge ihrer Drehzahlordnung als erste, zweite, dritte, vierte und fünfte Welle bezeichnete Wellen (W1, W2, W3, W4, W5) aufweisen, wobei die Antriebswelle (3) über das erste Schaltelement (A) mit fünften Welle (W5), über das fünfte Schaltelement (E) mit der dritten Welle (W3) und über das zweite Schaltelement (B) mit dem Rotor (11) verbindbar ist, wobei die Abtriebswelle (4) mit der vierten Welle (W4) ständig verbunden ist, wobei durch Schließen des dritten Schaltelements (C) die zweite Welle (W2) drehfest festsetzbar ist, wobei durch Schließen des vierten Schaltelements (D) die dritte Welle (W3) drehfest festsetzbar ist, wobei der Rotor (11) mit einem ersten Element (E14) des Vorschaltradsatzes (VRS) verbunden ist und die erste Welle (W1) mit einem zweiten Element (E24) des Vorschaltradsatzes (VRS) verbunden ist, wobei der Vorschaltradsatz (VRS) dazu eingerichtet ist eine feste Übersetzung zwischen seinem ersten Element (E14) und seinem zweiten Element (E24) bereitzustellen.

## Beschreibung

Die Erfindung betrifft ein Getriebe für ein Kraftfahrzeug, und einen Antriebsstrang für ein Hybridfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen zwei Wellen des Getriebes, durch Schaltelemente vorzugsweise automatisch schaltbar sind. Bei den Schaltelementen handelt es sich beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Ein Getriebe mit einer Getriebeeingangswelle und mit einer Getriebeausgangswelle sowie zumindest zwei Leistungspfaden zwischen der Getriebeeingangswelle und einem Hauptradsatz mit vier in Drehzahlordnung als erste, zweite, dritte und vierte Welle bezeichnete Wellen ist aus der DE 10 2012 201 377 A1 bekannt. Dabei ist zumindest eine Elektromaschine mit zumindest einer der Wellen des Hauptradsatzes verbunden, um ein lastschaltbares Getriebe mit zumindest acht Gängen zu schaffen, das hohe Gesamtspreizungen bei sehr günstigen Gangsprüngen erlaubt. Nachteilhafterweise ist ein mit diesem Getriebe ausgeführtes Fahrzeug lediglich im motorischen Betrieb der elektrischen Maschine und entsprechend eingestelltem Antrieb der elektrischen Maschine in Rückwärtsfahrtrichtung betreibbar. Über das Getriebe selbst steht keine mechanische Übersetzung für Rückwärtsfahrt zur Verfügung.

Der vorliegenden Erfindung liegt die Aufgabe zugrunde, ein mit geringem Aufwand herstellbares Getriebe mit einer elektrischen Maschine zur Verfügung zu stellen, mit dem einerseits umfassende Hybridfunktionen umsetzbar sind und das andererseits die Möglichkeit bietet, ein mit dem Getriebe ausgeführtes Fahrzeug unabhängig von einem Ladezustand eines der elektrischen Maschine zugeordneten Energiespeichers sowohl in Vorwärtsfahrt- als auch in Rückwärtsfahrtrichtung betreiben zu können.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, eine elektrische Maschine mit einem drehfesten Stator und einem drehbaren Rotor, einen Hauptradsatz mit drei Planetenradsätzen, einen Vorschaltradsatz sowie fünf Schaltelemente auf. Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Die drei Planetenradsätze des Hauptradsatzes weisen zusammen fünf in der Reihenfolge ihrer Drehzahlordnung als erste, zweite, dritte, vierte und fünfte Welle bezeichnete Wellen auf. Diese fünf Wellen sind dadurch gekennzeichnet, dass die Drehzahlen dieser Wellen in der genannten Reihenfolge linear ansteigen, abnehmen oder gleich sind. In anderen Worten ist die Drehzahl der ersten Welle kleiner gleich der Drehzahl der zweiten Welle. Die Drehzahl der zweiten Welle ist wiederum kleiner gleich der Drehzahl der dritten Welle. Die Drehzahl der dritten Welle ist kleiner gleich der Drehzahl der vierten Welle. Die Drehzahl der vierten Welle ist kleiner gleich der Drehzahl der fünften Welle. Diese Reihenfolge ist auch reversibel, sodass die fünfte Welle die kleinste Drehzahl aufweist, während die erste Welle eine Drehzahl annimmt die größer oder gleich groß wie die Drehzahl der fünfte Welle ist. Zwischen den Drehzahlen aller fünf Wellen besteht dabei stets ein linearer Zusammenhang. Die Drehzahl einer oder mehrerer der fünf Wellen kann dabei auch negative Werte, oder auch den Wert Null annehmen. Die Drehzahlordnung ist daher stets auf den vorzeichenbehafteten Wert der Drehzahlen zu beziehen, und nicht auf deren Betrag.

Der Hauptradsatz ist daher als ein sogenanntes "Drei-Steg-Fünf-Wellen-Getriebe" ausgebildet, welches aus drei über genau vier Koppelstellen kinematisch miteinander gekoppelten Einzel-Planetenradsätzen gebildet ist und bei dem fünf seiner Elemente ("Wellen") für andere Getriebeelemente frei zugänglich sind. Jeweils eine Koppelwelle ist dabei als ständige mechanische Verbindung zwischen einem Element - also Sonnenrad oder Steg oder Hohlrad - eines Einzel-Planetenradsatzes mit einem Element - also Sonnenrad oder Steg oder Hohlrad - eines weiteren Einzel-Planetenradsatzes definiert.

Durch Schließen des ersten Schaltelements ist die Antriebswelle mit der fünften Welle verbindbar. Durch Schließen des zweiten Schaltelements ist Antriebswelle mit dem Rotor der elektrischen Maschine verbindbar. Durch Schließen des dritten Schaltelements ist die zweite Welle drehfest festsetzbar, indem sie mit einem Gehäuse oder mit einem anderen drehfesten Bauelement des Getriebes verbindbar ist. Durch Schließen des vierten Schaltelements ist die dritte Welle in gleicher Weise drehfest festsetzbar. Durch Schließen des fünften Schaltelements ist die Antriebswelle mit der dritten Welle verbindbar. Die vierte Welle ist mit der Abtriebswelle ständig verbunden.

Der Rotor der elektrischen Maschine ist ferner mit einem ersten Element des Vorschaltradsatzes verbunden. Die erste Welle des Hauptradsatzes ist mit einem zweiten Element des Vorschaltradsatzes verbunden. Der Vorschaltradsatz ist dazu eingerichtet, eine feste Übersetzung zwischen seinem ersten Element und seinem zweiten Element bereitzustellen. Dazu kann der Vorschaltradsatz beispielsweise als Stirnradsatz oder als Planetenradsatz ausgebildet sein. Auch andere Ausführungsformen des Vorschaltradsatzes sind denkbar.

Die Anbindung des Rotors an die erste Welle des als Drei-Steg-Fünf-Wellen-Getriebes ausgebildeten Hauptradsatzes über den Vorschaltradsatz ermöglicht auf einfache Weise eine Ausbildung eines geeigneten mechanischen Rückwärtsganges zwischen der Antriebswelle und der Abtriebswelle. Durch die feste Übersetzung des Vorschaltradsatzes wird eine Drehzahlanpassung zwischen der Antriebswelle und der ersten Welle erreicht, die in weiterer Folge eine für die Anwendung im Kraftfahrzeug geeignete Rückwärtsgangübersetzung ermöglicht. Das erfindungsgemäße Getriebe ist zudem für die Umsetzung zahlreicher Hybridfunktionen geeignet, beispielsweise eines Antriebs der Abtriebswelle mittels der elektrischen Maschine, ohne die Antriebswelle anzutreiben, oder der Aufnahme bzw. Abgabe von Leistung durch die elektrische Maschine in jedem Vorwärtsgang des Getriebes. Die elektrische Maschine kann zudem einen Lastschaltvorgang zwischen Vorwärtsgängen des Getriebes unterstützen.

Vorzugsweise ist der Vorschaltradsatz dazu eingerichtet, an seinem zweiten Element eine zur Drehzahl des ersten Elements verringerte Drehzahl bereitzustellen. Dadurch kann im Rückwärtsgang eine verhältnismäßig hohe Übersetzung zwischen der Antriebswelle und der Abtriebswelle erzielt werden. Bei Verwendung des Getriebes im Kraftfahrzeug-Antriebsstrang kann somit die Steigfähigkeit des Kraftfahrzeugs beim Rückwärtsanfahren verbessert werden, insbesondere in Verbindung mit einem verhältnismäßig leistungsschwachen Antrieb.

Vorzugsweise ist der Vorschaltradsatz als ein Planetenradsatz ausgebildet. Planetenradsätze zeichnen sich durch eine kompakte Bauweise mit hoher Leistungsübertragungsfähigkeit aus. Gemäß einer ersten Variante wird das erste Element des Vorschaltradsatzes durch ein Sonnenrad des Planetenradsatzes gebildet. Ist der Planetenradsatz als ein Minus-Radsatz ausgebildet, so wird das zweite Element des Vorschaltradsatzes durch dessen Steg gebildet, und ein drittes Element des Vorschaltradsatzes durch dessen Hohlrad. Ist der Planetenradsatz als ein Plus-Radsatz ausgebildet, so wird das zweite Element des Vorschaltradsatzes durch dessen Hohlrad gebildet, und das dritte Element durch dessen Steg. Das dritte Element ist in der Ausführung gemäß der ersten Variante ständig drehfest festzusetzen, beispielsweise durch Anbindung an das Gehäuse des Getriebes. Gemäß einer zweiten Variante wird das erste Element des Vorschaltradsatzes durch das Hohlrad des als Minus-Planetenradsatzes ausgebildeten Planetenradsatzes gebildet. Ist der Planetenradsatz als Plus-Radsatz ausgebildet, so dient dessen Steg als erstes Element des Vorschaltradsatzes. Das zweite Element des Vorschaltradsatzes wird dabei durch den Steg des als Minus-Planetenradsatzes ausgebildeten Planetenradsatzes gebildet. Ist der Planetenradsatz als Plus-Radsatz ausgebildet, so dient dessen Hohlrad als zweites Element des Vorschaltradsatzes. Das dritte Element des Vorschaltradsatzes wird in der Ausführung gemäß der zweiten Variante durch das Sonnenrad des Planetenradsatzes gebildet, und ist ständig drehfest festzusetzen.

Gemäß einer möglichen Ausführung ist der als Planetenradsatz ausgeführte Vorschaltradsatz als ein Stufenplanetenradsatz ausgebildet. Die Planetenräder eines Stufenplanetenradsatzes weisen zwei unterschiedlich große Wirkdurchmesser auf. Durch Anbindung des Sonnenrads und des Hohlrads an unterschiedlichen Wirkdurchmesser der Planetenräder ist eine hohe Standgetriebeübersetzung des Planetenradsatzes bei geringem radialem Bauraumbedarf darstellbar. Dadurch kann die Integration des Vorschaltradsatzes bei engen Bauraumverhältnissen erleichtert werden.

Durch selektives paarweises Schließen der fünf Schaltelemente sind sechs Vorwärtsgänge zwischen der Antriebswelle und der Abtriebswelle darstellbar. Der erste Vorwärtsgang wird durch Schließen des ersten Schaltelements und des vierten Schaltelements gebildet. Der zweite Vorwärtsgang wird durch Schließen des ersten Schaltelements und des dritten Schaltelements gebildet. Der dritte Vorwärtsgang wird durch Schließen des ersten Schaltelements und des zweiten Schaltelements gebildet. Der vierte Vorwärtsgang wird durch Schließen des ersten Schaltelements und des fünften Schaltelements gebildet. Der fünfte Vorwärtsgang wird durch Schließen des zweiten und des fünften Schaltelements gebildet. Der sechste Vorwärtsgang wird durch Schließen des dritten und des fünften Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets ein Schaltelement auf, das in beiden diesen Gängen geschlossen ist. Dies vereinfacht den Schaltvorgang und verkürzt die Schaltdauer zwischen benachbarten Vorwärtsgängen.

Ein Rückwärtsgang zwischen der Antriebswelle und der Abtriebswelle ergibt sich vorzugsweise durch Schließen des zweiten Schaltelements und des vierten Schaltelements. Da das vierte Schaltelement auch im ersten Vorwärtsgang geschlossen ist, ist bei einem Umschaltvorgang zwischen erstem Vorwärtsgang und Rückwärtsgang nur ein Schaltelement zu öffnen, und ein Schaltelement zu schließen.

Gegebenenfalls kann ein zweiter Rückwärtsgang durch Schließen des zweiten Schaltelements und des dritten Schaltelements gebildet werden, wobei der zweite Rückwärtsgang jedoch eine wesentlich längere Übersetzung aufweist.

Ein rein elektrischer Antrieb der Abtriebswelle mittels der elektrischen Maschine ist ebenso möglich. Dazu ist entweder das dritte Schaltelement oder das vierte Schaltelement zu schließen. Je nach Drehrichtung des Rotors ergibt sich eine unterschiedliche Drehrichtung der Abtriebswelle. Ein elektrischer Antrieb mittels der elektrischen Maschine ermöglicht daher sowohl eine Vorwärtsfahrt als auch eine Rückwärtsfahrt des Kraftfahrzeugs. Dabei wird die Antriebswelle durch die elektrische Maschine nicht angetrieben.

Ist von den fünf Schaltelementen nur das erste oder das fünfte Schaltelement geschlossen, so ist ein Überlagerungsbetriebsmodus darstellbar. Durch Schließen des ersten Schaltelements ist die Antriebswelle mit der fünften Welle verbunden. Durch Offenhalten der übrigen an der Gangbildung beteiligten Schaltelemente ergibt sich ohne weiteres keine feste Drehzahlbeziehung zwischen den fünf Wellen. Dies in gilt in gleicher Weise, wenn durch alleiniges Schließen des fünften Schaltelements die Antriebswelle mit der dritten Welle verbunden ist. Erst durch Aufbringen eines Abstützmoments durch die elektrische Maschine an der ersten Welle ergibt sich eine feste Drehzahlbeziehung zwischen den fünf Wellen der drei Planetenradsätze. Dadurch kann die Abtriebsdrehzahl bei vorgegebener Drehzahl der Antriebswelle und Variation der Rotordrehzahl stufenlos verändert werden. Somit kann ein stufenloser Betrieb des Getriebes bereitgestellt werden, beispielsweise zum Anfahren des Kraftfahrzeugs.

Durch Schließen des zweiten Schaltelements wird eine Wirkverbindung zwischen der Antriebswelle und der elektrischen Maschine hergestellt, ohne auf die Abtriebswelle eine Drehzahl aufzubringen. Dadurch wird ein Standladebetriebsmodus bereitgestellt, bei dem eine mit der Antriebswelle verbundene Antriebseinheit einen Energiespeicher durch generatorischen Betrieb der elektrischen Maschine im Stillstand des Kraftfahrzeugs aufladen kann.

Gemäß einer Ausführungsform ist der Hauptradsatz als ein um die erste Welle erweiterter Ravigneaux-Radsatz ausgebildet. Ein Ravigneaux-Radsatz ist eine bekannte Bauform eines Zwei-Steg-Vier-Wellen-Getriebes, welche äußere und innere Planetenräder aufweist, welche miteinander kämmen und deren Stege miteinander verbunden sind. Im gegebenen Fall handelt es sich um einen Ravigneaux-Radsatz mit zwei Hohlrädern und ein Sonnenrad, der um ein zusätzliches Sonnenrad erweitert ist. Dieses zusätzliche Sonnenrad kämmt mit den äußeren Planetenrädern und ist Bestandteil der ersten Welle des Hauptradsatzes. Das Hohlrad, welches mit den inneren Planetenrädern kämmt, ist Bestandteil der zweiten Welle des Hauptradsatzes. Die zusammengefassten Stege sind Bestandteil der dritten Welle des Hauptradsatzes. Das Hohlrad, welches mit den äußeren Planetenrädern kämmt, ist Bestandteil der vierten Welle des Hauptradsatzes. Das Sonnenrad, welches mit den inneren Planetenrädern kämmt, ist Bestandteil der fünften Welle des Hauptradsatzes. Ein derart aufgebauter, erweiterter Ravigneaux-Radsatz zeichnet sich durch eine einfache Baubarkeit bei gleichzeitiger vorteilhaft geringer Bauteilbelastung sowie durch eine kompakte Bauweise aus.

Gemäß einer zweiten Ausführungsform bildet der erste und zweite Planetenradsatz zusammen einen Simpson-Radsatz aus. Ein Simpson-Radsatz ist eine bekannte Bauform eines Zwei-Steg-Vier-Wellen-Getriebes, welche sich durch eine Koppelung der beiden Sonnen und eine Steg-Hohlrad-Koppelung der als Minus-Radsätze ausgebildeten Planetenradsätze auszeichnet, wodurch ein axial besonders kompakter Radsatz gebildet wird. Ein Hohlrad des ersten Planetenradsatzes ist dabei Bestandteil der zweiten Welle des Hauptradsatzes. Ein Steg des ersten Planetenradsatzes und ein Hohlrad des zweiten Planetenradsatzes sind Bestandteile der dritten Welle des Hauptradsatzes. Ein Steg des zweiten Planetenradsatzes ist Bestandteil der vierten Welle des Hauptradsatzes. Die Sonnenräder des ersten und zweiten Planetenradsatzes sind Bestandteile der fünften Welle des Hauptradsatzes. Der dritte Planetenradsatz ist in geeigneter Weise an den Simpson-Radsatz anzubinden, beispielsweise indem ein Hohlrad des als Minus-Radsatz ausgebildeten dritten Planetenradsatzes Bestandteil der ersten Welle des Hauptradsatzes ist, ein Steg des dritten Planetenradsatzes Bestandteil der zweiten Welle des Hauptradsatzes ist und ein Sonnenrad des dritten Planetenradsatzes Bestandteil der dritten Welle des Hauptradsatzes ist. Diese Zuordnung der Elemente der drei Planetenradsätze, also Sonnenrad, Steg und Hohlrad, zu den Hauptradsatzwellen ist durch einen einfachen Aufbau sowie durch eine gute Zugänglichkeit zu den Schnittstellen der Hauptradsatzwellen gekennzeichnet.

Gemäß einer dritten Ausführungsform ist der erste Planetenradsatz radial innerhalb des zweiten Planetenradsatzes in einer gemeinsamen Radsatzebene angeordnet. Ein Sonnenrad des zweiten Planetenradsatzes und ein Hohlrad des ersten Planetenradsatzes sind dabei Bestandteile der zweiten Welle des Hauptradsatzes. Ein Steg des ersten Planetenradsatzes und ein Steg des zweiten Planetenradsatzes sind Bestandteile der dritten Welle des Hauptradsatzes. Ein Hohlrad des zweiten Planetenradsatzes ist Bestandteil der vierten Welle des Hauptradsatzes. Ein Sonnenrad des ersten Planetenradsatzes ist Bestandteil der fünften Welle des Hauptradsatzes. Durch diese Zuordnung kann die Hohlradverzahnung des ersten Planetenradsatzes an jener Baugruppe ausgebildet werden, welche die Sonnenradverzahnung des zweiten Planetenradsatzes trägt. Dadurch ist es möglich, die beiden Planetenradsätze trotz Anordnung in einer gemeinsamen Ebene radial kompakt zu gestalten, und gleichzeitig eine gute Zugänglichkeit zu den Schnittstellen der Radsatzwellen zu gewährleisten.

Sämtliche Ausführungsformen des Getriebes erlauben eine koaxiale Anordnung der äußeren Schnittstellen von Antriebswelle und Abtriebswelle an gegenüberliegenden axialen Enden des Getriebes. Eine solche Anordnung eignet sich besonders zur Anwendung des Getriebes in einem Kraftfahrzeug mit längs zur Fahrtrichtung des Kraftfahrzeugs ausgerichtetem Antriebsstrang. Bei dem Getriebe gemäß der ersten Ausführungsform ist dies durch eine Verbreiterung der inneren Planetenräder möglich, wobei das mit den äußeren Planetenrädern kämmende Hohlrad axial zwischen der äußeren Schnittstelle der Abtriebswelle und dem mit den inneren Planetenrädern kämmenden Hohlrad angeordnet ist.

Sämtliche Ausführungsformen des Getriebes erlauben auch eine Anordnung, bei der die äußere Schnittstelle der Abtriebswelle eine Verzahnung aufweist, welche mit einer Verzahnung einer zur Abtriebswelle achsparallel angeordneten Welle kämmt. Auf dieser achsparallelen Welle kann beispielsweise das Achsdifferential eines Fahrzeugantriebsstranges angeordnet sein. Eine solche Anordnung eignet sich besonders zur Anwendung des Getriebes in einem Kraftfahrzeug mit quer zur Fahrtrichtung des Kraftfahrzeugs ausgerichtetem Antriebsstrang.

Prinzipiell kann jedes der fünf Schaltelemente als kraftschlüssiges Schaltelement mit variabler Drehmomentübertragungsfähigkeit oder als formschlüssiges Schaltelement ausgebildet sein.

Vorzugsweise sind die fünf Schaltelemente des Getriebes als kraftschlüssige Schaltelemente mit variabler Drehmomentübertragungsfähigkeit oder als formschlüssige Schaltelemente ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Durch Verwendung von formschlüssigen Schaltelementen kann der mechanische Wirkungsgrad des Getriebes verbessert werden. Durch gezielten Eingriff der elektrischen Maschine ist eine Lastfreistellung des bei einer Schaltung zu öffnenden Schaltelements, eine Drehzahlführung auf den einzulegenden Gang und ein lastfreies Einlegen des zu schließenden Schaltelements auch während einer Leistungsübertragung zwischen Antriebswelle und Abtriebswelle möglich. Die elektrische Maschine ermöglicht daher eine Lastschaltung auch bei formschlüssigen Schaltelementen. Sind die fünf Schaltelemente als kraftschlüssige Schaltelemente ausgebildet, so hängt eine Lastschaltbarkeit nicht davon ab, ob die Funktionalität der elektrischen Maschine gegeben ist. Die Betriebsbereitschaft des Getriebes kann somit verbessert werden.

Gemäß einer Ausgestaltung ist das dritte Schaltelement als formschlüssiges Schaltelement ausgebildet, während das erste, zweite, vierte und fünfte Schaltelement als kraftschlüssige Schaltelemente ausgebildet sind. Da das dritte Schaltelement lediglich im zweiten und sechsten Vorwärtsgang geschlossen ist, kann durch die Ausbildung des dritten Schaltelements als formschlüssiges Schaltelement eine Verbesserung des mechanischen Wirkungsgrads erzielt werden.

Gemäß einer weiteren Ausgestaltung sind das dritte, vierte und fünfte Schaltelement als formschlüssige Schaltelemente ausgebildet, während das erste und zweite Schaltelement als kraftschlüssige Schaltelemente ausgebildet sind. Da das erste Schaltelement an der Bildung des ersten Vorwärtsganges beteiligt ist, kann das erste Schaltelement im Schlupfbetrieb als Anfahrelement für Vorwärtsfahrt dienen. Da das zweite Schaltelement an der Bildung des Rückwärtsganges beteiligt ist, kann das zweite Schaltelement im Schlupfbetrieb als Anfahrelement für Rückwärtsfahrt dienen. Durch Ausbildung des zweiten Schaltelements als formschlüssiges Schaltelement ist zudem ein Schwungstart möglich, bei dem die elektrische Maschine zunächst als Schwungmasse benutzt wird, und eine mit der Antriebswelle verbundene Verbrennungskraftmaschine durch anschließend Schließen des zweiten Schaltelements auf eine Startdrehzahl gebracht wird.

Vorzugsweise sind das erste und zweite Schaltelement zu einer Baugruppe zusammengefasst, und vorzugsweise zumindest abschnittsweise radial innerhalb der elektrischen Maschine angeordnet. Dadurch kann einerseits der Bauraum innerhalb der elektrischen Maschine genützt werden, andererseits ist durch die Zusammenfassung des ersten und zweiten Schaltelements zu einer Baugruppe die Ausbildung von zwei voneinander getrennten Nassräumen möglich. Im ersten Nassraum, in dem sich das erste und zweite Schaltelement befinden, wird vorzugsweise ein speziell für Automatikgetriebe geeignetes Öl zirkuliert (ATF), um die beiden Reibkupplungen zu kühlen und zu schmieren. Für die übrigen, als formschlüssige Schaltelemente ausgebildeten Schaltelemente genügt ein herkömmliches Getriebeöl zur Schmierung. Im zweiten Nassraum sind daher das dritte bis fünfte Schaltelement angeordnet.

Ist die Antriebswelle mit einem Rotor einer weiteren elektrischen Maschine gekoppelt, ist eine mit der Antriebswelle in Wirkverbindung bringbare Verbrennungskraftmaschine einerseits über die weitere elektrische Maschine beispielsweise über einen Schleppstart in einen zugeschalteten Betriebszustand überführbar oder bei entsprechend zugeschalteter Verbrennungskraftmaschine in Verbindung mit der weiteren motorisch betriebenen elektrischen Maschine ein sogenannter Boost-Betriebszustand darstellbar oder im generatorischen Betrieb der weiteren elektrischen Maschine im Bereich der elektrischen Maschine elektrische Energie erzeugbar, mit der beispielsweise ein Bordnetz eines Kraftfahrzeuges versorgbar ist oder für einen motorischen Betrieb der elektrischen Maschine zur Verfügung stellbar ist.

Das Getriebe kann Bestandteil eines Antriebsstrangs eines Hybridfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden oder über eine Trennkupplung verbindbar ist. Die Abtriebswelle des Getriebes ist mit einem Achsgetriebe antriebswirkverbunden, welcher mit Rädern des Hybridfahrzeugs verbunden ist. Der Antriebsstrang ermöglicht mehrere Antriebsmodi des Hybridfahrzeugs. In einem elektrischen Fahrbetrieb wird das Hybridfahrzeug von der elektrischen Maschine des Getriebes angetrieben. In einem verbrennungsmotorischen Betrieb wird das Hybridfahrzeug von der Verbrennungskraftmaschine angetrieben. In einem hybridischen Betrieb wird das Hybridfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Ausführungsbeispiele der Erfindung sind nachfolgend anhand der beigefügten Figuren detailliert beschrieben.

Es zeigt:
Fig. 1 ein Räderschema eines ersten Ausführungsbeispiels des erfindungsgemäßen Getriebes mit koaxialem An- und Abtrieb;
Fig. 2 eine Fig. 1 entsprechende Darstellung einer zweiten Ausführungsform des erfindungsgemäßen Getriebes mit seitlichem Abtrieb;
Fig. 3 eine Teilseitenansicht des Radsatzes des Getriebes gemäß Fig. 2;
Fig. 4 ein Schaltschema des Getriebes gemäß Fig. 1 bzw. gemäß Fig. 2;
Fig. 5 eine Fig. 1 entsprechende Darstellung einer dritten Ausführungsform des erfindungsgemäßen Getriebes mit koaxialem An- und Abtrieb;
Fig. 6 eine Fig. 1 entsprechende Darstellung einer vierten Ausführungsform des erfindungsgemäßen Getriebes mit koaxialem An- und Abtrieb;
Fig. 7 ein Schaltschema des Getriebes gemäß Fig. 5 bzw. gemäß Fig. 6;
Fig. 8 einen Drehzahlplan des Getriebes gemäß Fig. 1, Fig. 2, Fig. 5 und Fig. 6, und
Fig. 9 einen Antriebsstrang eines Kraftfahrzeugs

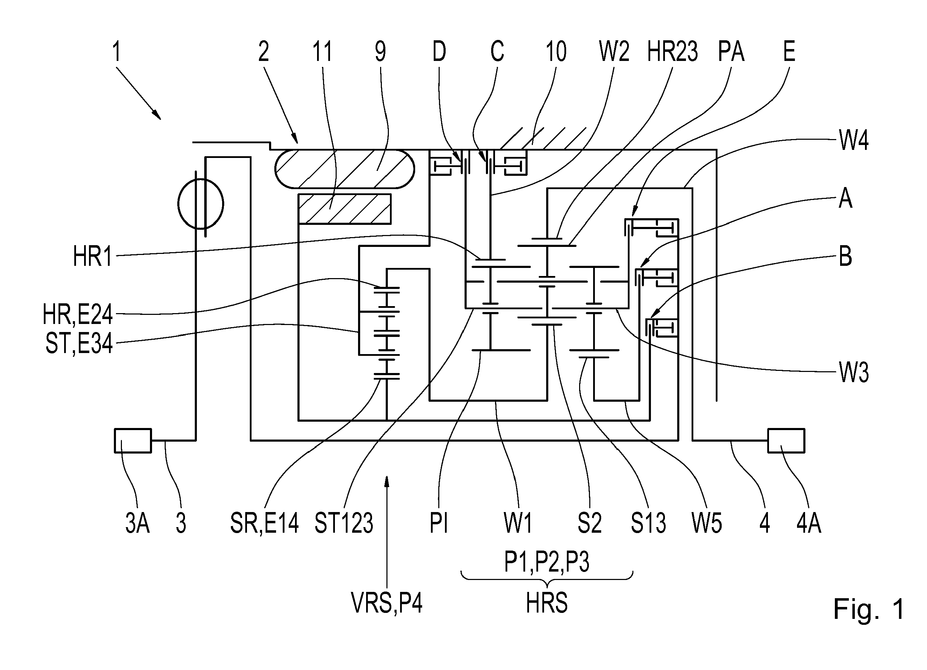

Fig. 1 zeigt eine erste Ausführungsform eines Getriebes 1 mit einer elektrischen Maschine 2, mit einer Antriebswelle 3, mit einer Abtriebswelle 4 und mit einem Vorschaltradsatz VRS und einem Hauptradsatz HRS, der als eine sogenannte 3-Steg-5-Wellen-Getriebeeinheit ausgeführt ist und im Wesentlichen drei Planetenradsätze P1, P2 und P3 umfasst. Die 3-Steg-5-Wellen-Getriebeeinheit bzw. der Hauptradsatz HRS umfasst fünf Wellen W1 bis W5. Die Planetenradsätze P1, P2 sind jeweils als Minus-Planetenradsätze ausgebildet, während der dritte Planetenradsatze P3 und ein Planetenradsatz P4 des Vorschaltradsatzes VRS als jeweils ein Plus-Planetenradsatz ausgeführt sind. Die Ausgestaltung des Vorschaltradsatzes VRS als Plus-Planetenradsatz ermöglicht es, vorteilhafte Gangsprünge vorzusehen und gleichzeitig die Planetendrehzahlen niedrig zu halten sowie eine maximale Drehzahl der elektrischen Maschine 2 sinnvoll zu begrenzen. Äußere Schnittstellen 3A, 4A der Antriebswelle 3 und Abtriebswelle 4 sind koaxial zueinander und an gegenüberliegenden axialen Enden des Getriebes 1 angeordnet.

Ein Stator 9 der elektrischen Maschine 2 ist drehfest mit einem gehäusefesten Bauteil 10 bzw. einem Getriebegehäuse des Getriebes 1 oder mit einem anderen drehfesten Bauelement des Getriebes 1 verbunden, sodass der Stator 9 keine Drehzahl annehmen kann. Ein drehbar gelagerter Rotor 11 der elektrischen Maschine 2 ist mit einer als Sonnenrad SR ausgebildeten Planetenradsatzwelle des Vorschaltradsatzes VRS drehfest verbunden und über das Schaltelement B mit der Antriebswelle 3 verbindbar.

Der Vorschaltradsatz VRS weist ein erstes Element 14, ein zweites Element E24 und ein drittes Element E34 auf. Das erste Element E14 ist dem Sonnenrad SR zugeordnet. Das dritte Element E34 ist einem als Steg ST ausgebildete Planetenradsatzwelle des Vorschaltradsatzes VRS zugeordnet und ist drehfest ausgeführt, während eine als Hohlrad HR ausgebildete Planetenradsatzwelle des Vorschaltradsatzes VRS dem zweiten Element E24 zugeordnet und mit der ersten Welle W1 verbunden ist, die wiederum mit einer als Sonnenrad S2 ausgeführten Planetenradsatzwelle des zweiten Planetenradsatzes P2 in Wirkverbindung steht. Als zusammengefasste Stege ST123 ausgebildete Planetenradsatzwellen des ersten, zweiten und dritten Planetenradsatzes P1, P2, P3 sind mit der dritten Welle W3 drehfest verbunden und über das Schaltelement D mit dem gehäusefesten Bauteil 10 und über das Schaltelement E mit der Antriebswelle 3 drehfest verbindbar.

Der Hauptradsatz HRS stellt einen um die Welle W5 erweiterten Ravigneaux-Radsatz dar, dessen innere Planetenräder PI zur koaxialen Anordnung der Antriebswelle 3 und der Abtriebswelle 4 in einer axialen Breite von drei Radsatzebenen ausgeführt sind. Die fünf Schaltelemente A bis E sind wie bei konventionellen Automatikgetrieben jeweils als Reibschaltelemente ausgebildet, weshalb das Schaltelement A als Anfahrelement für einen Anfahrvorgang in Vorwärtsfahrtrichtung und das Schaltelement B als Anfahrelement für einen Anfahrvorgang in Rückwärtsfahrtrichtung eines mit dem Getriebe 1 gemäß Fig. 1 ausgeführten Fahrzeugs nutzbar sind. Zusätzlich ist auch das Schaltelement D als Anfahrelement in Vorwärts- und in Rückwärtsfahrtrichtung nutzbar.

Eine als Hohlrad HR23 ausgebildete Planetenradsatzwelle, welche dem zweiten Planetenradsatzes P2 und dem dritten Planetenradsatz P3 des Hauptradsatzes HRS zugeordnet ist, ist mit der vierten Welle W4 verbunden, die zusätzlich mit der Abtriebswelle 4 drehfest gekoppelt ist. Das Hohlrad HR23 kämmt mit den äußeren Planetenrädern PA. Des Weiteren steht eine als Hohlrad HR1 ausgeführte Planetenradsatzwelle des ersten Planetenradsatzes P1 des Hauptradsatzes HRS mit der zweiten Welle W2 in Wirkverbindung, die über das Schaltelement C mit dem gehäusefesten Bauteil 10 drehfest verbindbar ist. Eine als Sonnenrad S13 ausgebildete Planetenradsatzwelle, welche dem ersten und dem dritten Planetenradsatz P1, P3 des Hauptradsatzes zugeordnet ist, ist mit der fünften Welle W5 drehfest verbunden und über das Schaltelement A mit der Antriebswelle 3 koppelbar.

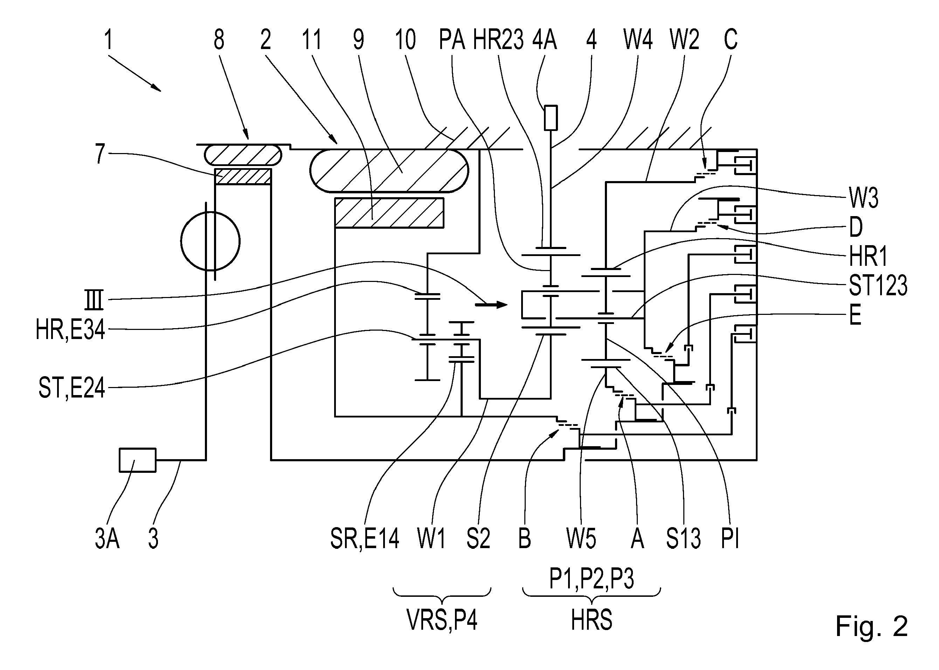

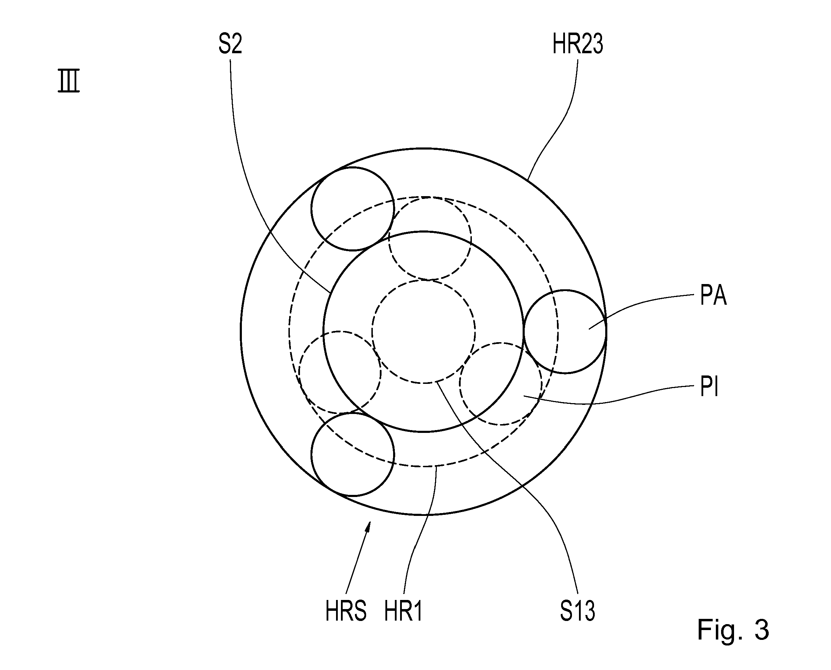

Das in Fig. 2 gezeigte zweite Ausführungsbeispiel des Getriebes 1 entspricht im Wesentlichen der in Fig. 1 gezeigten ersten Ausführungsform des Getriebes 1, wobei das Getriebe 1 gemäß Fig. 2 einen seitlichen Abtrieb aufweist, weshalb die inneren Planetenräder PI des Hauptradsatzes HRS nur in einer axialen Breite von zwei Radsatzebenen gestaltet sind. In Fig. 3 ist der Hauptradsatz HRS des Getriebes 1 gemäß Fig. 2 aus einer in Fig. 2 näher gekennzeichneten Ansicht III stark schematisiert dargestellt. Zusätzlich sind bei dem Getriebe 1 gemäß Fig. 2 alle Schaltelemente A bis E als formschlüssige Schaltelemente bzw. Klauenschaltelemente ausgebildet. In geöffnetem Betriebszustand der Schaltelemente A bis E werden daher jeweils geringere Schleppmomente erzeugt, als dies bei der Ausführung der Schaltelemente A bis E als reibschlüssige Schaltelemente der Fall ist. Das Getriebe 1 gemäß Fig. 2 ist mit einer weiteren elektrischen Maschine 8 ausgeführt, dessen Rotor 7 mit der Antriebswelle 3 drehfest verbunden ist. Zusätzlich ist der Vorschaltradsatz VRS der Getriebevorrichtung 1 gemäß Fig. 2 als gestufter Minus-Planetenradsatz P4 ausgebildet, mittels welchem ebenfalls wiederum die geforderten Gangsprung- und Drehzahlvorgaben erfüllt werden.

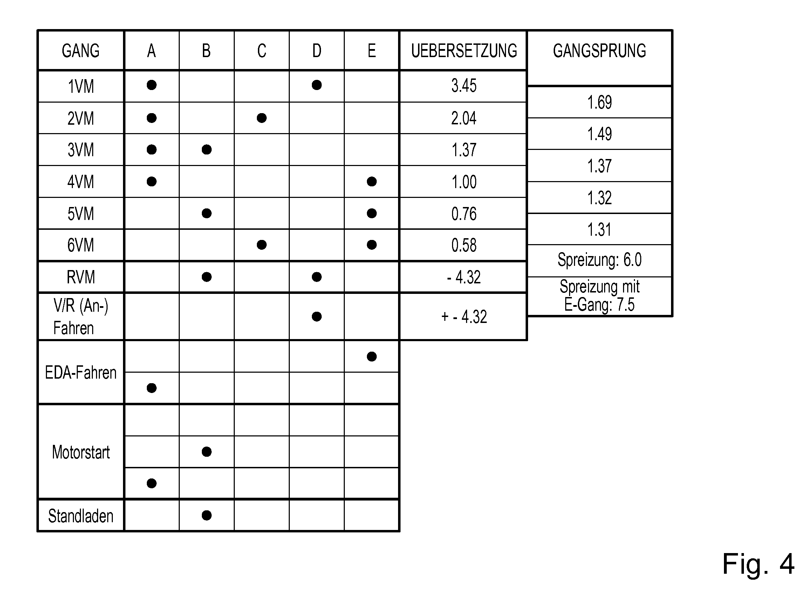

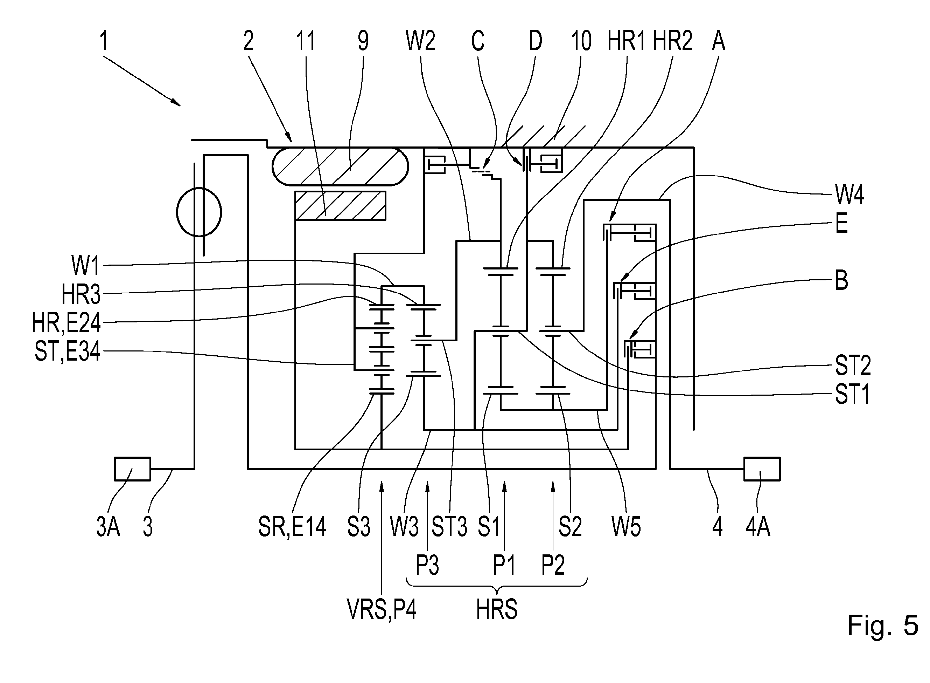

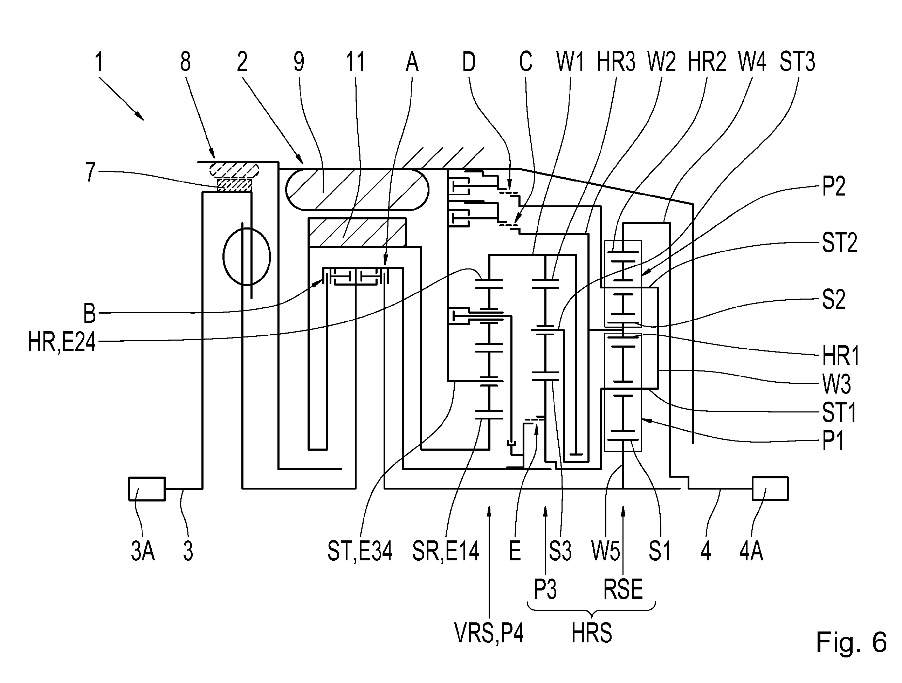

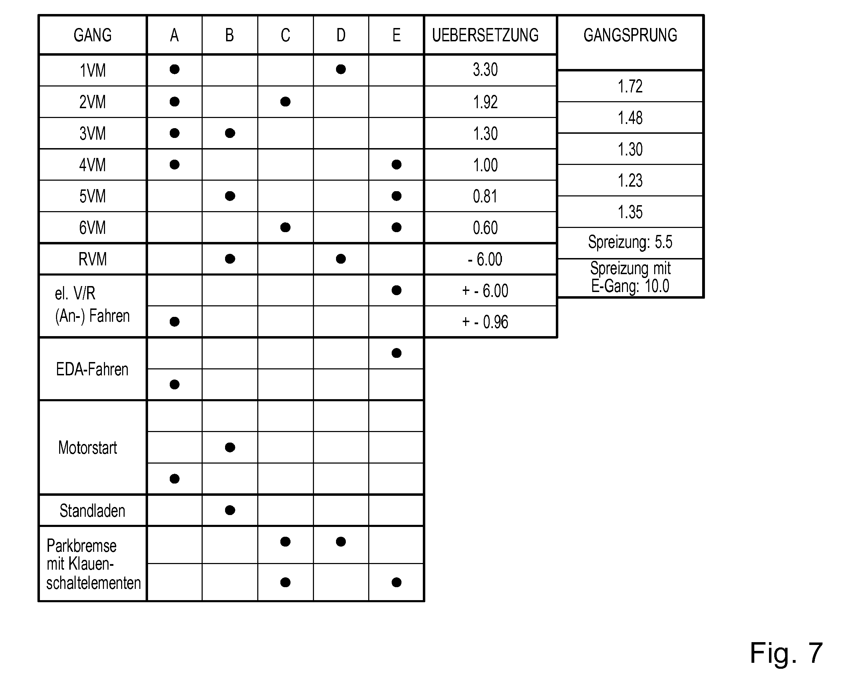

Fig. 4 zeigt ein Schaltschema der beiden Ausführungsformen des Getriebes 1 gemäß Fig. 1 und Fig. 2, während Fig. 7 ein weiteres Schaltschema weiterer in Fig. 5 und Fig. 6 dargestellter Ausführungsformen des Getriebes 1 zeigt. Das in Fig. 7 näher gezeigte Schaltschema des Getriebes 1 gemäß Fig. 5 und Fig. 6 entspricht im Wesentlichen dem in Fig. 4 gezeigten Schaltschema, wobei die Getriebe 1 gemäß Fig. 5 und gemäß Fig. 6 jeweils andere Übersetzungswerte sowie Gangsprünge aufweisen.

In den in Fig. 4 und Fig. 7 gezeigten Schaltschemata sind die jeweils zur Darstellung eines definierten Betriebszustands des Getriebes 1 in geschlossenem Betriebszustand vorliegenden Schaltelemente A bis E durch Kreise gekennzeichnet. Zusätzlich sind den Schaltschemata die jeweiligen Übersetzungswerte der einzelnen Gangstufen 1VM bis 6VM und RVM und die daraus zu bestimmenden Gangsprünge zum nächsthöheren Gang entnehmbar. Die Übersetzungswerte ergeben sich aus den beispielhaft vorgegebenen Standgetriebeübersetzungen der Planetenradsätze P1, P2, P3, P4. Bei sequentieller Schaltweise können Doppelschaltungen bzw. Gruppenschaltungen vermieden werden, da zwei benachbarte Gangstufen ein Schaltelement gemeinsam benutzen. Die verschiedenen Gänge bzw. Übersetzungen des Getriebes 1 sind in den verschiedenen Zeilen des Schaltschemas dargestellt.

Bei allen Ausführungsformen des Getriebes 1 gemäß Fig. 1, Fig. 2, Fig. 5 und Fig. 6 sind sechs Übersetzungen 1 VM bis 6VM für Vorwärtsfahrt zwischen der Antriebswelle 3 und der Abtriebswelle 4 darstellbar. Ein erster Vorwärtsgang 1VM zwischen der Antriebswelle 3 und der Abtriebswelle 4 ergibt sich durch Schließen des Schaltelements A und des Schaltelements D. Ein zweiter Vorwärtsgang 2VM ist im Getriebe 1 eingelegt, wenn das erste Schaltelement A und gleichzeitig das Schaltelement C geschlossen sind. Der dritte Vorwärtsgang 3VM ist dann im Getriebe 1 eingelegt, wenn die Schaltelemente A und B geschlossen sind. Sind im Getriebe 1 das Schaltelement A und das Schaltelement E gleichzeitig in geschlossenen Betriebszustand überführt, wird im Getriebe 1 der vierte Vorwärtsgang 4VM dargestellt. Liegt eine entsprechende Anforderung zum Einlegen des fünften Vorwärtsgangs 5VM vor, sind das Schaltelement B und das Schaltelement E in geschlossenen Betriebszustand zu überführen. Der sechste Vorwärtsgang 6 VM ist im Getriebe 1 eingelegt, wenn die Schaltelemente C und E gleichzeitig in geschlossenem Betriebszustand vorliegen.

Soll ein mit dem Getriebe 1 ausgeführtes Fahrzeug in Rückwärtsfahrtrichtung bewegt werden, sind die Schaltelemente B und D bzw. B und C in geschlossenem Betriebszustand zu halten oder in diesen zu überführen.

Ist das Schaltelement D als reibschlüssiges Schaltelement ausgebildet, kann dieses bei den jeweils über das Schaltelement D dargestellten Übersetzungen für Vorwärtsoder Rückwärtsfahrt als Anfahrelement verwendet werden.

Liegt lediglich das Schaltelement D bzw. C in geschlossenem Betriebszustand vor, ist über die elektrische Maschine 2 des Getriebes 1 ein elektrischer Fahrbetrieb darstellbar. Zusätzlich besteht bei lediglich geschlossenem Schaltelement E oder A die Möglichkeit, über das Getriebe 1 einen sogenannten EDA-Fahrbetrieb darzustellen, über den hauptsächlich verschleißfreie Anfahrvorgänge realisiert werden, wobei die elektrische Maschine 2 bei geschlossenem Schaltelement E vorzugsweise generatorisch betrieben wird, während die elektrische Maschine 2 bei geschlossenem Schaltelement A und gleichzeitig aktiviertem EDA-Fahrbetrieb motorisch betrieben wird.

Liegen die Schaltelemente A, B, E in geöffnetem Betriebszustand vor, ist eine mit der Antriebswelle 3 wirkverbundene Antriebsmaschine, die vorzugsweise als Brennkraftmaschine ausgebildet sein kann, über die weitere elektrische Maschine 8 in an sich bekannter Art und Weise während eines motorischen Betriebs der weiteren elektrischen Maschine 8 startbar. Im Unterschied hierzu ist eine solche Antriebsmaschine bei geschlossenem Schaltelement B oder bei geschlossenem Schaltelement A über die elektrische Maschine 2 zuschaltbar bzw. in einen zugeschalteten Betriebszustand überführbar. Des Weiteren ist bei geschlossenem Schaltelement B ein sogenanntes Standladen durchführbar, bei dem die elektrische Maschine 2 generatorisch betrieben und von der mit der Antriebswelle 3 wirkverbundenen Antriebsmaschine während eines Fahrzeugstillstands angetrieben wird.

Die in Fig. 5 und Fig. 6 gezeigten weiteren Ausführungsformen der Getriebevorrichtung 1 unterscheiden sich von den in Fig. 1 und Fig. 2 dargestellten Ausführungsformen des Getriebes 1 im Wesentlichen im Bereich des Hauptradsatzes HRS.

Zugunsten der Übersichtlichkeit wird in der nachfolgenden Beschreibung zu den Getrieben 1 gemäß Fig. 5 und Fig. 6 jeweils lediglich auf wesentliche Unterschiede zu den Ausführungsformen der Getriebe 1 gemäß Fig. 1 und Fig. 2 eingegangen und bezüglich der weiteren Funktionsweise der Getriebe 1 gemäß Fig. 5 und Fig. 6 auf die bevorstehende Beschreibung verwiesen.

Bei dem Getriebe 1 gemäß Fig. 5 ist die erste Welle W1 mit einer als Hohlrad HR3 ausgebildeten Planetenradsatzwelle des dritten Planetenradsatzes P3 des Hauptradsatzes HRS und mit dem Hohlrad HR des wiederum als Plus-Planetenradsatz P4 ausgeführten Vorschaltradsatzes VRS drehfest verbunden. Des Weiteren ist die zweite Welle W2 mit einer als Steg ST3 ausgeführten Planetenradsatzwelle des dritten Planetenradsatzes P3 und mit dem Hohlrad HR1 des ersten Planetenradsatzes P1 verbunden sowie über das Schaltelement C drehfest mit dem gehäusefesten Bauteil 10 verbindbar. Die dritte Welle W3 ist mit dem Steg ST1 des ersten Planetenradsatzes P1, einer als Sonnenrad S3 ausgeführten Planetenradsatzwelle des dritten Planetenradsatzes P3 und dem Hohlrad HR2 des zweiten Planetenradsatzes P2 verbunden und über das Schaltelement D mit dem gehäusefesten Bauteil 10 drehfest verbindbar sowie über das Schaltelement E mit der Antriebswelle 3 in Wirkverbindung bringbar. Die vierte Welle W4 ist mit dem Steg ST2 des zweiten Planetenradsatzes P2 und der Abtriebswelle 4 drehfest verbunden, während die fünfte Welle W5 mit dem Sonnenrad S2 des zweiten Planetenradsatzes P2 und mit dem Sonnenrad S1 des ersten Planetenradsatzes P1, die drehfest miteinander gekoppelt sind, verbunden ist. Zusätzlich ist die fünfte Welle W5 wiederum über das Schaltelement A mit der Antriebswelle 3 in Wirkverbindung bringbar. Der Planetenradsatz P4 des Vorschaltradsatzes VRS und die drei Planetenradsätze P1 bis P3 des Hauptradsatzes HRS des Getriebes 1 gemäß Fig. 5 sind in axialer Richtung in nebeneinanderangeordneten Radsatzebenen vorgesehen.

Im Unterschied hierzu sind der erste Planetenradsatz P1 und der zweite Planetenradsatz P2 des Hauptradsatzes HRS bei dem Getriebe 1 gemäß Fig. 6 in einer gemeinsamen Radsatzebene RSE angeordnet, wobei der erste Planetenradsatz P1 radial innerhalb des zweiten Planetenradsatzes P2 des Hauptradsatzes HRS vorgesehen ist, womit das Getriebe 1 gemäß Fig. 6 in axialer Richtung einen geringeren Bauraumbedarf aufweist als das Getriebe 1 gemäß Fig. 5.

Bei dem Getriebe 1 gemäß Fig. 6 ist die zweite Welle W2 neben dem Steg ST3 des dritten Planetenradsatzes P3 mit dem Sonnenrad S2 des zweiten Planetenradsatzes P2 und dem Hohlrad HR1 des ersten Planetenradsatzes P1 drehfest verbunden, die einteilig ausgebildet sind.

Im Unterschied zu dem Getriebe 1 gemäß Fig. 1 sind die als Bremsen ausgeführten Schaltelemente C und D sowie das als Kupplung ausgebildete Schaltelement E zur Schleppmomentreduzierung als Klauenschaltelemente ausgeführt. Die Reibschaltelemente A und B sind bei der Ausführung des Getriebes 1 gemäß Fig. 6 ebenfalls ansteuerungstechnisch vorteilhafterweise als Anfahrelemente nutzbar, zwischen welchen beispielsweise beim Reversieren einfach umgeschaltet werden kann. Zusätzlich ist über das Reibschaltelement A ein Schleppstart einer mit der Antriebswelle 3 wirkverbundenen Antriebsmaschine und über das Reibschaltelement B ein Schwungstart durchführbar sowie ein Standladebetrieb eines der elektrischen Maschine 2 und/oder der weiteren elektrischen Maschine 8 zugeordneten elektrischen Energiespeichers umsetzbar.

Des Weiteren ist über die Klauenbremsen C und D eine im Schaltschema gemäß Fig. 7 aufgeführte sogenannte interne Parksperre darstellbar, welche durch Bestromen der elektrischen Maschine 2 und im motorischen Betrieb der elektrischen Maschine 2 durch elektromaschinenseitiges Anlegen eines der Hangabtriebskraft entgegenwirkenden Drehmoments auslegbar ist, wobei hierbei vorzugsweise das Schaltelement C in geöffnetem Betriebszustand überführt wird.

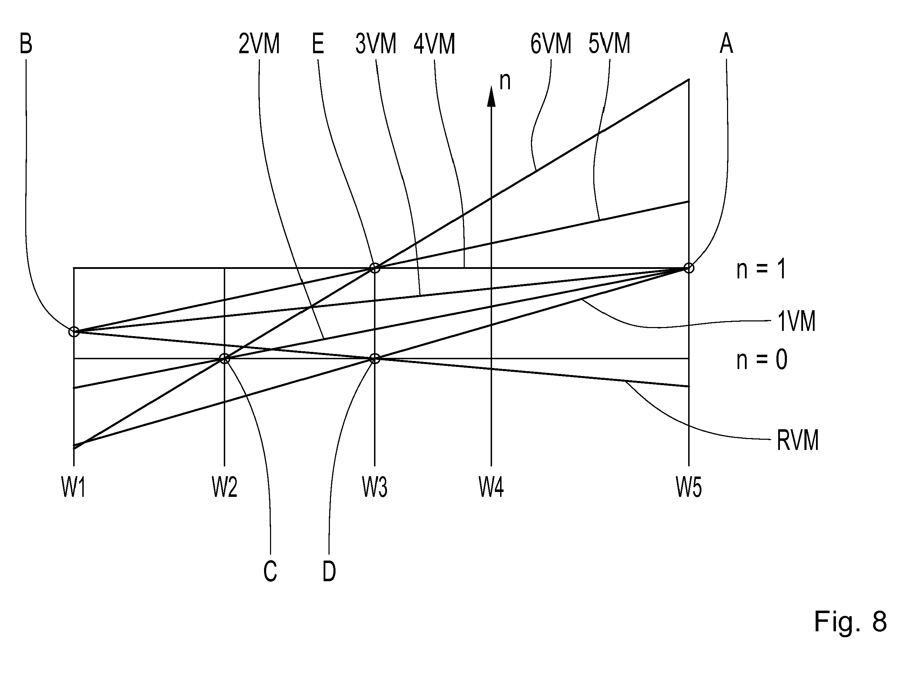

In Fig. 8 sind in vertikaler Richtung die Drehzahlen der fünf Wellen W1 bis W5 des Hauptradsatzes HRS im Verhältnis zur Drehzahl der Antriebswelle 3 aufgetragen.

Die maximal auftretende Drehzahl n der Antriebswelle 3 ist auf den Wert Eins normiert. Die Abstände zwischen den fünf Wellen W1 bis W5 des Hauptradsatzes HRS ergeben sich durch die Standgetriebeübersetzungen der Planetenradsätze P1 bis P3. Zu einem bestimmten Betriebspunkt gehörende Drehzahlverhältnisse lassen sich jeweils durch eine Gerade verbinden.

Aus den Schaltschemata gemäß Fig. 4 und Fig. 7 ist entnehmbar, dass alle in der Zeichnung dargestellten Ausführungsformen der Getriebe 1 ohne zusätzliche getriebeeingangsseitig angeordnete Trennkupplung in gewünschtem Umfang verwendbar sind. Dies resultiert aus der Tatsache, dass die elektrische Maschine 2 mit einer mit der Antriebswelle 3 gekoppelten Antriebsmaschine weder fest noch über ein wie auch immer ausgebildetes Getriebe permanent in Wirkverbindung steht.

Wie die im Vergleich zum ersten verbrennungsmotorischen Gang 1VM kürzere Übersetzung des vorzugsweise ersten elektrischen Fahrgangs zeigt, ist die Leistungsfähigkeit der elektrischen Maschine 2 im Vergleich zur Leistungsfähigkeit einer mit der Antriebswelle 3 gekoppelten Brennkraftmaschine kleiner dimensionierbar, ohne dass eine Steigfähigkeit eines mit dem Getriebe 1 ausgeführten Fahrzeugs zu begrenzen ist.

Das maximal von der elektrischen Maschine 2 zur Verfügung stellbare Drehmoment ist gegenüber dem von der Brennkraftmaschine zur Verfügung stellbaren maximalen Drehmoment bei einer Übersetzungswerte gemäß Fig. 4 aufweisenden Getriebe 1 um den Faktor 1,25 und bei einem Getriebe 1 mit Übersetzungswerten gemäß Fig. 7 um den Faktor 1,82 kleiner auslegbar, was sich jeweils besonders kostengünstig auswirkt.

Bei einer Ausführung des Schaltelements C als Reibschaltelement besteht beispielsweise auch die Möglichkeit, den zweiten elektrischen Fahrgang unter Last zu schalten. Des Weiteren ist über ein Reibschaltelement C ein wenigstens annähernd zugkraftunterbrechungsfreier Übersetzungswechsel zwischen der ersten Übersetzung 1 VM und der zweiten Übersetzung 2VM für Vorwärtsfahrt unterstützbar.

Unter Berücksichtigung der jeweils in Fig. 4 und Fig. 7 gezeigten Schaltlogik können als Klauenschaltelemente ausgebildete Schaltelemente, die im Fahrbetrieb nicht gleichzeitig geschlossen sind, beispielsweise die Schaltelemente C und D, bauraum- und kostengünstig mittels doppelt wirkender Aktuatoren betätigt werden.

Zusätzlich sind beispielsweise die beiden Schaltelemente A und B bei dem in Fig. 6 dargestellten Ausführungsbeispiel des Getriebes 1 ähnlich einer Doppelkupplung eines Doppelkupplungsgetriebes zusammenfassbar und auf der einer mit der Antriebswelle 3 wirkverbundenen Antriebsmaschine zugewandten Seite des Getriebes 1 innerhalb der elektrischen Maschine 2 anordenbar und gegebenenfalls über eine getrennte Ölversorgung mit einem besonders geeigneten Hydraulikfluid beaufschlagbar, während der restliche Getriebebereich mit einem einfachen Getriebeöl versorgbar ist.

Alle in der Zeichnung dargestellten Ausführungsbeispiele der Getriebe 1 sind mit der weiteren elektrischen Maschine 8 kombinierbar, über die beispielsweise ein verbrennungsmotorisch-elektrischer Fahrbetrieb realisierbar ist. Des Weiteren ist ein nur mit hohem Steuer- und Regelaufwand realisierbarer Schleppstart vermeidbar.

Bei einer Ausführung des Getriebes 1 mit einer getriebeeingangsseitig vorgesehenen Trennkupplung, über die eine mit der Antriebswelle 3 gekoppelte Antriebsmaschine vom restlichen Antriebsstrang eines Fahrzeugs abkoppelbar ist, besteht die Möglichkeit, die bei den Getrieben 1 über das Schaltelement B herstellbare Verbindung zwischen der Antriebswelle 3 und der elektrischen Maschine 2 permanent vorzusehen und die elektrische Maschine 2 dauerhaft drehfest mit der Antriebswelle 3 zu koppeln.

Bei der letztbeschriebenen Ausführung des Getriebes 1 ist das Schaltelement B entweder im Bereich zwischen der elektrischen Maschine 2 und der Verbindung zwischen der Antriebswelle und dem Vorschaltradsatz VRS, ausgangsseitig des Vorschaltradsatzes VRS oder zwischen dem Gehäuse 10 und der drehfest ausgeführten Planetenradsatzwelle des Vorschaltradsatzes VRS vorsehbar. Dann entspricht der Drehzahlbereich der elektrischen Maschine 2 dem Drehzahlbereich der mit der Antriebswelle 3 verbundenen Antriebsmaschine. In geöffnetem Betriebszustand der Trennkupplung und bei einer Ausführung der Schaltelemente C und E als Reibschaltelemente besteht auf einfache Art und Weise die Möglichkeit, alle Übersetzungen 1VM bis RVM elektrisch zu fahren und zwischen diesen Übersetzungen zugkraftunterbrechungsfrei umzuschalten.

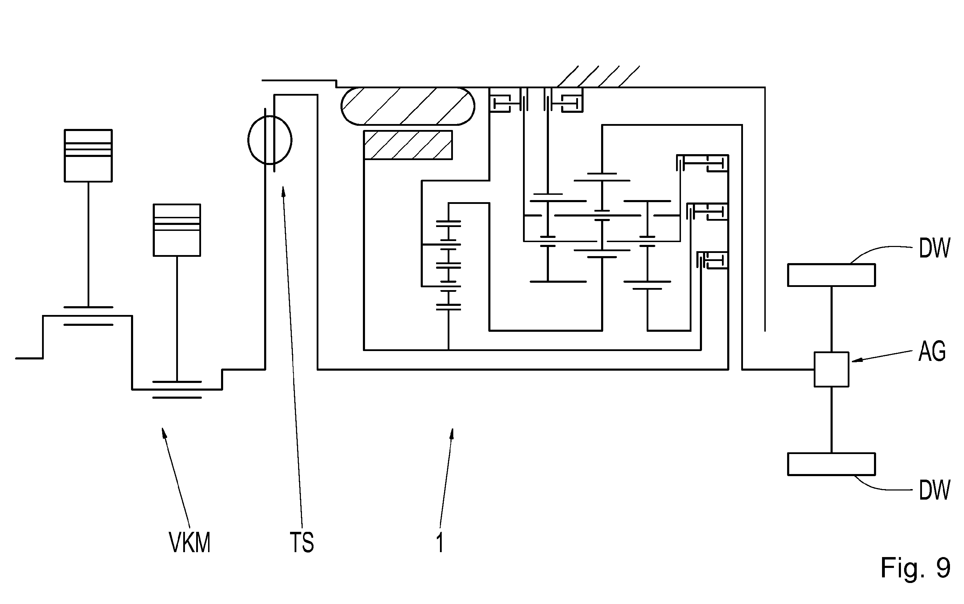

Figur 9 zeigt einen Antriebsstrang eines Hybridfahrzeuges mit einem Getriebe 1 gemäß dem ersten Ausführungsbeispiel. Dies ist lediglich beispielhaft anzusehen. Der Antriebsstrang könnte mit jedem der angeführten Ausführungsbeispiele des Getriebes 1 ausgeführt sein. Der Antriebsstrang weist eine Verbrennungskraftmaschine VKM auf, die über einen Torsionsschwingungsdämpfer TS mit der Antriebswelle 3 des Getriebes G verbunden ist. Vom Achsgetriebe AG ausgehend wird die Leistung, die an der Abtriebswelle 4 anliegt, auf Räder DW des Kraftfahrzeugs verteilt. Bei jenen Ausführungsbeispielen des Getriebes 1, bei denen die äußeren Schnittstellen 3A, 4A der Antriebswelle 3 und Abtriebswelle 4 am selben axialen Ende des Getriebes 1 angeordnet sind, ist an der äußeren Schnittstelle 4A der Abtriebswelle 4 eine Verzahnung ausgebildet. Diese Verzahnung kämmt mit der Verzahnung einer achsparallel zur Hauptachse des Getriebes 1 angeordneten Welle. Das Achsgetriebe AG des Antriebsstranges wäre in diesem Fall an dieser achsparallel angeordneten Welle angebunden.

### Bezugszeichen

- 1: Getriebevorrichtung
- 2: elektrische Maschine
- 3: Antriebswelle
- 3A: Äußere Schnittstelle der Antriebswelle
- 4: Abtriebswelle
- 4A: Äußere Schnittstelle der Abtriebswelle
- 7: Rotor
- 8: weitere elektrische Maschine
- 9: Stator
- 10: Getriebegehäuse
- 11: Rotor
- A -E: Schaltelement
- HR, HR1 - HR3: Hohlrad
- HRS: Hauptradsatz
- n: Drehzahl
- P1 - P3: Planetenradsatz des Hauptradsatzes
- P4: Planetenradsatz des Vorschaltradsatzes
- SR, S1 - S3: Sonnenrad
- ST, ST1 - ST3: Steg
- VRS: Vorschaltradsatz
- E14: Erstes Element des Vorschaltradsatzes
- E24: Zweites Element des Vorschaltradsatzes
- E34: Drittes Element des Vorschaltradsatzes
- W1 - W5: Anschlusswelle
- 1VM - 6VM: Vorwärtsgang
- RVM: Rückwärtsgang
- 1 EM, 2EM: elektrischer Gang
- RSE: Radsatzebene
- VKM: Verbrennungskraftmaschine
- DW: Räder
- AG: Achsgetriebe
- TS: Torsionsschwingungsdämpfer

## Patentansprüche

1. Getriebe (1) für ein Kraftfahrzeug, wobei das Getriebe (1) eine Antriebswelle (3), eine Abtriebswelle (4), eine elektrische Maschine (2) mit einem drehfesten Stator (9) und einem drehbaren Rotor (11), einen Hauptradsatz (HRS) mit einem ersten, zweiten und dritten Planetenradsatz (P1, P2, P3), einen Vorschaltradsatz (VRS), sowie ein erstes, zweites, drittes, viertes und fünftes Schaltelement (A, B, C, D, E) aufweist,
- wobei die drei Planetenradsätze (P1, P2, P3) des Hauptradsatzes (HRS) zusammen fünf in der Reihenfolge ihrer Drehzahlordnung als erste, zweite, dritte, vierte und fünfte Welle bezeichnete Wellen (W1, W2, W3, W4, W5) aufweisen,
- wobei die Antriebswelle (3) über das erste Schaltelement (A) mit fünften Welle (W5), über das fünfte Schaltelement (E) mit der dritten Welle (W3) und über das zweite Schaltelement (B) mit dem Rotor (11) verbindbar ist,
- wobei die Abtriebswelle (4) mit der vierten Welle (W4) ständig verbunden ist,
- wobei durch Schließen des dritten Schaltelements (C) die zweite Welle (W2) drehfest festsetzbar ist,
- wobei durch Schließen des vierten Schaltelements (D) die dritte Welle (W3) drehfest festsetzbar ist,
- wobei der Rotor (11) mit einem ersten Element (E14) des Vorschaltradsatzes (VRS) verbunden ist und die erste Welle (W1) mit einem zweiten Element (E24) des Vorschaltradsatzes (VRS) verbunden ist,
- wobei der Vorschaltradsatz (VRS) dazu eingerichtet ist eine feste Übersetzung zwischen seinem ersten Element (E14) und seinem zweiten Element (E24) bereitzustellen.

2. Getriebe (1) nach Anspruch 1, **dadurch gekennzeichnet, dass** der Vorschaltradsatz (VRS) dazu eingerichtet an seinem zweiten Element (E24) eine zur Drehzahl seines ersten Elements (E14) verringerte Drehzahl bereitzustellen.

3. Getriebe (1) nach Anspruch 2, **dadurch gekennzeichnet, dass** der Vorschaltradsatz (VRS) als Planetenradsatz (P4) ausgebildet ist,
- wobei das erste Element (E14) des Vorschaltradsatzes (VRS) durch ein Sonnenrad (SR) des Planetenradsatzes (P4) gebildet ist,
- wobei das zweite Element (E24) im Falle eines als Minus-Radsatz ausgebildeten Planetenradsatzes (P4) durch dessen Steg (ST) und im Falle eines als Plus-Radsatz ausgebildeten Planetenradsatzes (P4) durch dessen Hohlrad (HR) gebildet ist,
- wobei ein drittes Element (E34) des Vorschaltradsatzes (VRS) im Falle eines als Minus-Radsatz ausgebildeten Planetenradsatzes (P4) durch dessen Hohlrad (HR) und im Falle eines als Plus-Radsatz ausgebildeten Planetenradsatzes (P4) durch dessen Steg (ST) gebildet ist, und
- wobei das dritte Element (E34) des Vorschaltradsatzes (VRS) ständig drehfest festgesetzt ist.

4. Getriebe (1) nach Anspruch 2, **dadurch gekennzeichnet, dass** der Vorschaltradsatz (VRS) als Planetenradsatz (P4) ausgebildet ist,
- wobei das erste Element (E14) des Vorschaltradsatzes (VRS) im Falle eines als Minus-Radsatz ausgebildeten Planetenradsatzes (P4) durch dessen Hohlrad (HR) und im Falle eines als Plus-Radsatz ausgebildeten Planetenradsatzes (P4) durch dessen Steg (ST) gebildet ist,
- wobei das zweite Element (E24) des Vorschaltradsatzes (VRS) im Falle eines als Minus-Radsatz ausgebildeten Planetenradsatzes (P4) durch dessen Steg (ST) und im Falle eines als Plus-Radsatz ausgebildeten Planetenradsatzes (P4) durch dessen Hohlrad (HR) gebildet ist,
- wobei ein drittes Element (E34) des Vorschaltradsatzes (VRS) durch ein Sonnenrad (SR) des Planetenradsatzes (P4) gebildet ist,
- wobei das dritte Element (E34) des Vorschaltradsatzes (VRS) ständig drehfest festgesetzt ist.

5. Getriebe (1) nach Anspruch 3 oder Anspruch 4, **dadurch gekennzeichnet, dass** der Planetenradsatz (P4) als Stufenplanetenradsatz ausgebildet ist.

6. Getriebe (1) nach einem der vorangehenden Ansprüche, **dadurch gekennzeichnet, dass** durch selektives paarweises Schließen der fünf Schaltelemente (A bis E) sechs Vorwärtsgänge (1VM-6VM) zwischen der Antriebswelle (3) und der Abtriebswelle (4) darstellbar sind, wobei sich
- der erste Vorwärtsgang (1VM) durch Schließen des ersten Schaltelements (A) und des vierten Schaltelements (D),
- der zweite Vorwärtsgang (2VM) durch Schließen des ersten Schaltelements (A) und des dritten Schaltelements (C),
- der dritte Vorwärtsgang (3VM) durch Schließen des ersten Schaltelements (A) und des zweiten Schaltelements (B),
- der vierte Vorwärtsgang (4VM) durch Schließen des ersten Schaltelements (A) und des fünften Schaltelements (E),
- der fünfte Vorwärtsgang (5VM) durch Schließen des zweiten Schaltelements (B) und des fünften Schaltelements (E), und
- der sechste Vorwärtsgang (6VM) sich durch Schließen des dritten Schaltelements (C) und des fünften Schaltelements (E) ergibt.

7. Getriebe (1) nach einem der vorangehenden Ansprüche, **dadurch gekennzeichnet, dass** sich ein Rückwärtsgang (RVM) zwischen der Antriebswelle (3) und der Abtriebswelle (4) durch Schließen des zweiten Schaltelements (B) und des vierten Schaltelements (D) ergibt.

8. Getriebe (1) nach einem der vorangehenden Ansprüche, **dadurch gekennzeichnet, dass** der Hauptradsatz (HRS) als ein um die erste Welle (W1) erweiterter Ravigneaux-Radsatz ausgebildet ist, wobei
- ein Sonnenrad (S2), welches mit den äußeren Planetenrädern (PA) des Ravigneaux-Radsatzes kämmt, Bestandteil der ersten Welle (W1) ist, wobei
- ein Hohlrad (HR1), welches mit den inneren Planetenrädern (PA) des Ravigneaux-Radsatzes kämmt, Bestandteil der zweiten Welle (W2) ist, wobei
- Stege (ST123) des Ravigneaux-Radsatzes Bestandteile der dritten Welle (W3) sind, wobei
- ein Hohlrad (HR23), welches mit den äußeren Planetenrädern (PA) des Ravigneaux-Radsatzes kämmt, Bestandteil der vierten Welle (W4) ist, und wobei
- ein Sonnenrad (S13), welches mit den inneren Planetenrädern (PI) des Ravigneaux-Radsatzes kämmt, Bestandteil der fünften Welle (W5) ist.

9. Getriebe (1) nach einem der Ansprüche 1 bis 7, **dadurch gekennzeichnet, dass** der erste und zweite Planetenradsatz (P1, P2) des Hauptradsatzes (HRS) zusammen einen Simpson-Radsatz bilden, wobei
- ein Hohlrad (HR1) des ersten Planetenradsatzes (P1) Bestandteil der zweiten Welle (W2) ist, wobei
- ein Steg (ST1) des ersten Planetenradsatzes (P1) und ein Hohlrad (HR2) des zweiten Planetenradsatzes (P2) Bestandteile der dritten Welle (W3) sind, wobei
- ein Steg (ST2) des zweiten Planetenradsatzes (P2) Bestandteil der vierten Welle (W4) ist, und wobei
- die Sonnenräder (S1, S2) des ersten und zweiten Planetenradsatzes (P1, P2) Bestandteile der fünften Welle (W5) sind.

10. Getriebe (1) nach einem der Ansprüche 1 bis 7, **dadurch gekennzeichnet, dass** der erste Planetenradsatz (P1) des Hauptradsatzes (HRS) radial innerhalb des zweiten Planetenradsatzes (P2) des Hauptradsatzes (HRS) in einer gemeinsamen Radsatzebene (RSE) angeordnet ist, wobei
- ein Sonnenrad (S2) des zweiten Planetenradsatzes (P2) und ein Hohlrad (HR1) des ersten Planetenradsatzes (P1) Bestandteile der zweiten Welle (W2) sind, wobei
- ein Steg (ST1) des ersten Planetenradsatzes (P1) und ein Steg (ST2) des zweiten Planetenradsatzes (P2) Bestandteile der dritten Welle (W3) sind, wobei
- ein Hohlrad (HR2) des zweiten Planetenradsatzes (P2) Bestandteil der vierten Welle (W4) ist, und wobei
- ein Sonnenrad (S1) des ersten Planetenradsatzes (P1) Bestandteil der fünften Welle (W5) ist.

11. Getriebe (1) nach einem der vorangehenden Ansprüche, **dadurch gekennzeichnet, dass** äußere Schnittstellen (3A, 4A) der Antriebswelle (3) und Abtriebswelle (4) koaxial zueinander und an gegenüberliegenden axialen Enden des Getriebes (1) angeordnet sind.

12. Getriebe (1) nach einem der Ansprüche 1 bis 10, **dadurch gekennzeichnet, dass** die äußere Schnittstelle (4A) der Abtriebswelle (4) eine Verzahnung aufweist, welche mit einer Verzahnung einer zur Abtriebswelle (4) achsparallel angeordneten Welle kämmt.

13. Getriebe (1) nach einem der vorangehenden Ansprüche, **dadurch gekennzeichnet, dass** die fünf Schaltelemente (A bis E) als kraftschlüssige Schaltelemente mit variabler Drehmomentübertragungsfähigkeit oder als formschlüssige Schaltelemente ausgebildet sind.

14. Getriebe (1) nach einem der Ansprüche 1 bis 12, **dadurch gekennzeichnet, dass** das dritte Schaltelement (C) als formschlüssiges Schaltelement ausgebildet ist, wobei das erste, zweite, vierte und fünfte Schaltelement (A, B, D, E) als kraftschlüssige Schaltelemente mit variabler Drehmomentübertragungsfähigkeit ausgebildet sind.

15. Getriebe (1) nach einem der Ansprüche 1 bis 12, **dadurch gekennzeichnet, dass** das dritte, vierte und fünfte Schaltelement (C, D, E) als formschlüssige Schaltelemente ausgebildet sind, wobei das erste und zweite Schaltelement (A, B) als kraftschlüssige Schaltelemente mit variabler Drehmomentübertragungsfähigkeit ausgebildet sind.

16. Getriebe (1) nach einem der vorangehenden Ansprüche, **dadurch gekennzeichnet, dass** das erste und zweite Schaltelement (A, B) zu einer Baugruppe zusammengefasst und zumindest abschnittsweise radial innerhalb der elektrischen Maschine (2) angeordnet sind.

17. Getriebe (1) nach einem der vorangehenden Ansprüche, **dadurch gekennzeichnet, dass** der Rotor (7) einer zweiten elektrischen Maschine (8) mit der Antriebswelle (3) verbunden ist.

18. Antriebsstrang für ein Hybridfahrzeug, wobei der Antriebsstrang eine Verbrennungskraftmaschine (VKM), ein Getriebe (1) nach einem der vorangehenden Ansprüche sowie ein mit Rädern (DW) des Hybridfahrzeugs verbundenes Achsgetriebe (AG) aufweist, wobei die Antriebswelle (3) des Getriebes (1) ständig mit der Verbrennungskraftmaschine (VKM) drehelastisch verbunden oder verbindbar ist und die Abtriebswelle (4) des Getriebes (1) mit dem Achsgetriebe (AG) antriebswirkverbunden ist.
